# EUROPÄISCHE PATENTSCHRIFT

(11) **EP 2 342 031 B1**
(45) Veröffentlichungstag und Bekanntmachung des Hinweises auf die Patenterteilung: **08.04.2020**
(21) Anmeldenummer: 09796611.3
(22) Anmeldetag: 29.10.2009
(51) Int. Cl.: B22D 7/00, B22D 9/00, B22D 11/14, B22D 33/00, B22D 41/00, B22D 41/02, B22D 41/14, B22D 41/30, B22D 41/52, B25J 19/06

(54) **ROBOTERINTERAKTIONSSYSTEM**
ROBOT INTERACTION SYSTEM
SYSTÈME INTERACTIF DE ROBOT

(30) Priorität: 29.10.2008 DE 102008053699; 04.02.2009 DE 102009007540; 21.10.2009 DE 102009050249
(43) Veröffentlichungstag der Anmeldung: 13.07.2011
(73) Patentinhaber: SMS group GmbH, 40237 Düsseldorf (DE)
(72) Erfinder: PLOCIENNIK, Christian, 40878 Ratingen (DE); SCHÖCK, Hans-Wilhelm, 47239 Duisburg (DE); MOORS, Mark, 40235 Düsseldorf (DE)
(74) Vertreter: Klüppel, Walter
(86) Internationale Anmeldenummer: PCT/EP2009/007765
(87) Internationale Veröffentlichungsnummer: WO 2010/063349

(56) Entgegenhaltungen:
- EP-A- 1 635 107
- DE-A1- 10 320 343
- DE-A1-102005 003 827
- DE-A1-102005 011 143
- JP-A- 7 016 739
- JP-A- 2006 043 861
- KR-A- 20030 001 661
- KR-A- 20030 016 127
- US-A- 5 037 672
- US-A- 6 073 678
- US-B2- 6 805 190

## Beschreibung

Die Erfindung richtet sich auf ein Roboterinteraktionssystem umfassend einen Roboter mit einer Robotersteuerung mit eine zugeordnete Mensch-Roboter-Schnittstelle beeinflussenden Betriebsraten und Betriebsmodi.

Aus dem Stand der Technik ist es bekannt, hütten- und/oder walzwerkstechnische Anlagen mit Manipulatoren oder Robotern, insbesondere Industrierobotern, auszustatten. So existieren beispielsweise seit langem Manipulatoren zum Ankoppeln eines Schattenrohres an eine Gießwanne oder zum Transport schwerer Steine beim Ausmauern eines Konverters. Auch vollautomatische Roboter finden Anwendung, so beispielsweise zum Lackieren von Coils oder zum Ausspritzen eines Elektrolichtbogenofens. Den meisten dieser Anwendungen ist gemeinsam, dass der jeweilige Roboter an die jeweilige spezielle Aufgabe angepasst und auf diese ausgerichtet ist.

Wie beispielsweise aus der WO 2005/118182 A1 ist ferner der Einsatz von Multifunktionsrobotern, die mehr als eine Aufgabe ausführen, bekannt, wobei in diesem Stand der Technik das Robotersystem derart ausgelegt ist, dass von ihm mehrere unterschiedliche Tätigkeiten auf einer Gießbühne wahrgenommen werden können. Ein Robotersystem, das einen Multifunktionsroboter umfasst, der innerhalb eines Pfannenwartungsstandes den Boden einer Pfanne wartet ist aus der WO 2008/025562 A1 bekannt.

Die aus dem Stand der Technik bekannten Roboter, insbesondere Multifunktionsroboter, können zwar grundsätzlich unterschiedliche Aufgaben wahrnehmen, ihre Funktionalität ist jedoch in der Regel auf den vollautomatischen Einsatz gerichtet.

Allenfalls hilfsweise kann der Mensch in seiner Funktion als Arbeitspersonal oder Werker mittels eines Telemanipulationsbetriebsmodus des Multifunktionsroboters in dessen Arbeitstätigkeit und Funktionalität eingreifen. Während der Tätigkeit und im Betriebszustand des Multifunktionsroboters müssen Arbeitsraum und Bewegungsraum von Roboter und Mensch zu jedem Zeitpunkt getrennt bleiben, damit der Roboter den Menschen nicht gefährdet. Vollautomatische Lösungen benötigen jedoch für die einwandfreie Funktionalität des jeweiligen Roboters ein bestimmtes Maß an notwendiger Sensorik oder Wahrnehmung, Geschicklichkeit und/oder Entscheidungsfähigkeit, um einen Arbeitsprozess durchführen zu können. Bei komplexen Arbeitsvorgängen stoßen derartige Systeme daher hinsichtlich der für ihre Realisierung notwendigen Kosten, hinsichtlich der Systemstabilität und hinsichtlich der Prozesssicherheit an ihre Grenzen. Gerade in hütten- und walzwerkstechnischen Anlagen tritt während bestimmter manueller Arbeiten oftmals die Notwendigkeit auf, eine qualifizierte und schnelle Entscheidung über das weitere Vorgehen aufgrund einer Beobachtung durch den Menschen, also den im jeweiligen Arbeitsbereich tätigen Werker oder das Arbeitspersonal, zu treffen. So müssen bei Wartungsarbeiten an einer Gießpfanne Entscheidungen darüber getroffen werden, welche Teile weiterverwendet und welche ausgewechselt werden sollen. Dies bedingt nicht nur das Erkennen des jeweiligen Zustandes sondern erfordert auch ein bestimmtes Maß an Entscheidungsfähigkeit um die jeweils richtige Entscheidung zu treffen. Bei den bisher aus dem Stand der Technik bekannten Lösungen werden in einem solchen Fall dann die Industrieroboter ausgestellt oder festgestellt oder verriegelt und betritt ein Arbeiter den mit Schutzzäunen umgebenen Bewegungsraum und Arbeitsbereich des Roboters, um die notwendige Inspektion und Entscheidung zu treffen. Bei Arbeitsabläufen, die von einem häufigen Wechsel von Arbeitstätigkeiten und Beobachtungs- oder Inspektionstätigkeiten betroffen sind, ist eine solche Lösung unbefriedigend, da der Roboter häufig stillgesetzt werden muss. Auch bestimmte einfache manuelle Aufgaben gestalten sich sowohl für einen vollautomatischen wie auch einen teleoperierten Manipulator als technisch unverhältnismäßig aufwendig oder zeichnen sich durch ein ungünstiges Kosten-Nutzen-Verhältnis aus, weil zur Ablösung der einfachen manuellen menschlichen Tätigkeit das Robotersystem mit einer hochkomplexen Sensorik ausgestattet werden müsste. So ist das simple Entfernen eines kleinen Sicherungselementes wie eines Splintes für den Menschen eine einfache manuelle Tätigkeit, weil er die Lage des Splintes visuell erfassen und von Hand leicht herausziehen kann. Um dieselbe Aufgabe von einem Roboter durchführen zu lassen, muss dieser aber mit einer komplexen Sensorik versehen werden, die es ermöglicht, die Position des Elementes, in diesem Falle des Splintes, zu erfassen. Erst danach kann der Roboter den Splint entfernen. Soll dies beispielsweise mit Hilfe eines Telemanipulators geschehen, ist diese Tätigkeit zudem aufwendig, unzuverlässig und langsam.

Eine Möglichkeit dieses Problem zu mindern besteht darin, den jeweiligen Arbeitsplatz und die zugehörigen Arbeitsmittel an die Automatisierung anzupassen. So wird in der WO 2008/025562 A1 eine konkrete Implementierung für einen Schiebermechanismus einer Stahlpfanne vorgeschlagen, der dann mit Hilfe eines Roboters auswechselbar ist. Nachteilig bei diesem System ist es, dass der Aufwand, eine solche Anpassung vorzunehmen, erhebliche Kosten verursacht und damit die Wirtschaftlichkeit einer damit ausgestatteten Anlage aufgrund der damit verbundenen Investitionskosten vermindert. So ist es bei dem in der WO 2008/025562 A1 beschriebenen Beispiel so, dass jede Gießpfanne mit dem entsprechenden Schiebersystem und einer zugehörigen Befestigung ausgestattet werden muss.

Ein weiterer wesentlicher Nachteil bekannter Systeme besteht darin, dass bei ihrer Anwendung gegebenenfalls die Zugänglichkeit der jeweiligen Anlage verschlechtert ist. Während bei Manipulatoren die Sicherheit durch die verantwortungsvolle Bedienung durch den Menschen, d.h. das jeweilige Bedienungspersonal, sichergestellt wird, ist es bei konventionellen, vollautomatischen Industrierobotern aufgrund gesetzlicher Bestimmungen (in Europa beispielsweise die Richtlinie 2006/42/EG) notwendig, eine Abtrennung des Arbeits- und Bewegungsbereiches des Roboters vom Aufenthaltsort von Menschen, d.h. vom Bedienungspersonal, vorzusehen.

Schließlich ist es aus der WO 2007/057061 A1 bekannt, den tätigen Arbeitsroboter aus dem eigentlichen Arbeitsbereich herauszuschwenken, so dass dann die Zugänglichkeit des Arbeitsbereiches für Bedienungspersonal möglich ist. Das Wegschwenken des Roboters benötigt aber eine bestimmte Zeitspanne, so dass in Gefahrenmomenten gegebenenfalls wertvolle Zeit vergeht, bis Bedienungspersonal den Gefahrenbereich betreten und dort dem Gefahrenmoment entgegenwirken kann.

Der Erfindung liegt die Aufgabe zugrunde, eine Lösung zu schaffen, die eine flexiblere Anpassung eines Roboters oder Robotersystems an unterschiedliche Grade einer Mensch-Roboter-Interaktion ermöglicht.

Diese Aufgabe wird erfindungsgemäß gelöst durch ein Verfahren zum Betrieb eines Roboterinteraktionssystems, das an einer hüttentechnischen Anlage angeordnet ist, gemäß Anspruch 1. Weitere Ausgestaltungen des Verfahrens sind in den abhängigen Ansprüchen dargelegt.

Durch die Erfindung wird somit eine flexible Lösung für die Gestaltung eines Robotersystems, seines Bewegungs- und Arbeitsbereiches sowie seine Arbeitsweise, einer arbeitsteiligen Aufgabenausführung mit zeitlicher und räumlicher Aufgabenteilung in Interaktion zu menschlichem Bedienungspersonal, geschaffen, so dass mehrere Aufgaben schnell und effizient wahrgenommen werden können, ohne dabei durch eine vollautomatische oder ferngesteuerte Auslegung des Robotersystems eingeschränkt oder beschränkt zu sein. Erfindungsgemäß wird somit erreicht, dass die Möglichkeiten moderner Industrieroboter mit menschlicher Wahrnehmung und Entscheidungsfähigkeit kombiniert werden können. Dazu wird insbesondere in hütten- oder walzwerkstechnischen Einrichtungen oder Anlagen einem jeweiligen Arbeitsplatz ein Robotersystem zugeordnet, das sich flexibel an mehrere unterschiedliche Tätigkeiten innerhalb der jeweiligen Arbeitsumgebung anpassen lässt. Die Flexibilität des Robotersystems wird dadurch erreicht, dass das System verschiedene Betriebsmodi aufweist, die unterschiedliche Formen der Zusammenarbeit zwischen einem menschlichen Arbeiter oder dem Bedienpersonal und dem Robotersystem zulässt sowie erweiterte Betriebsarten umfasst. Die Robotersteuerung ist entsprechend um diese Betriebsmodi erweitert. Hierzu werden für das Robotersystem verschiedene Interaktionsformen eingeführt, welche eine zwischen den Interaktionspartnern Roboter und Mensch in Form von Werkern oder Bedienungspersonal eine arbeitsteilige Aufgabenausführung mit verschiedener Ausprägung zeitlicher und räumlicher Aufgabenteilung ermöglichen. Die verschiedenen Interaktionsformen definieren dabei die Ebenen der zeitlichen und örtlichen Trennung zwischen den interagierenden Partnern Roboter und Werker, innerhalb des Bewegungs- oder Arbeitsraums des Robotersystems. Beispielsweise wäre eine direkte Zusammenarbeit von Arbeiter und Roboter, die gemeinsam eine Tätigkeit am gleichen Werkstück ohne ihre zeitliche und räumliche Trennung durchführen, eine solche Interaktionsform, die allgemein als Kollaboration bezeichnet wird. Diese Interaktionsform schließt ebenso den Vorgang des direkten Beobachtens mit ein, bei welcher der Roboter eigenständig eine Arbeit ausführt und vom Menschen, der sich im Bewegungsraum des Roboters aufhält, dabei beobachtet wird. Eine andere Interaktion wäre das alleinige Arbeiten des Roboters, während er von einem Menschen in sicherer Entfernung ferngesteuert wird. Hierbei liegt dann eine örtliche und zeitliche Trennung der Interaktionspartner im Arbeitsraum vor.

Das Roboterinteraktionssystem zeichnet sich durch mehrere Roboterbetriebsarten aus, die vorzugsweise neben dem sonst üblichen (voll-)automatisierten Betrieb neue und weitere Betriebsarten dem Roboterinteraktionssystem und der Robotersteuerung hinzufügen, die eine stärkere Interaktion mit dem Bedienungspersonal oder dem Werker zulassen.

Eine solche neue Betriebsart ist der Manipulationsbetrieb, bei welchem sich der Roboter im sogenannten Handbetrieb befindet. Im Manipulationsbetrieb wird der Roboter über eine Handsteuerung betrieben, die dem Arbeiter/Werker das direkte Steuerung der Achsen und/oder eine kartesische Steuerung des Endeffektors ermöglicht. Im Manipulationsbetrieb wird zwischen drei Modi mit unterschiedlicher Funktionalität unterschieden, die entsprechend dem Abstand zwischen Roboter und menschlichem Bedienungspersonal unterschieden werden.

Bei einem ersten Modus wird der Roboter als handgeführter Roboter betrieben. In diesem Modus kann das menschliche Bedienungspersonal den Roboter direkt mit den Händen führen. Dies wird durch Kraft-Moment Sensoren erreicht, die am Roboter angeordnet sind und den Druck messen, den der jeweilige Werker auf den Roboter, bevorzugt den Endeffektor bzw. ein zu bewegendes Teil des Roboters, ausübt.

*Ein* anderer Modus besteht in der Führung des Roboters über eine Handsteuerung. In diesem Modus steht der jeweilige Werker neben dem Roboter, insbesondere innerhalb des Bewegungsraumes des Roboters, und betätigt den Roboter über eine Steuerung, die als Bedienpult in Form eines Steuerknüppels oder einer Kombination von Steuerknüppeln oder als Spacemouse ausgeführt ist.

Ein weiterer Modus betrifft die teleoperierte Führung des Roboters über eine Handsteuerung, bei der das menschliche Bedienungspersonal/der Werker außerhalb des Bewegungs- und Arbeitsraumes des Roboters steht, beispielsweise in einem Kontrollraum, und den Roboter aus der Ferne oder durch Kameras beobachtet, wobei dann die Handsteuerung wie im vorstehenden zweiten Modus ausgeführt sein kann. Im Manipulationsbetrieb stehen dem Bediener/Werker die Möglichkeiten der Steuerung der Achsen und/oder die direkte Steuerung des Greifers/Werkzeugs des jeweiligen Roboters zur Verfügung.

Eine weitere Roboterbetriebsart ist der Halb-Automatikbetrieb, bei welchem der Roboter Sequenzen eines Roboterprogramms automatisch abfährt. Im Halb-Automatikbetrieb stellt der Roboter dem Bediener eine Reihe von programmierten Sequenzen zur Verfügung, die einzelnen Teilarbeitsschritten der jeweiligen Arbeitsaufgabe, die dem Roboter und dem Roboterinteraktionssystem zugeordnet sind, entsprechen. Der Bediener kann dabei jeweils einzelne Arbeitssequenzen anwählen und diese beliebig stoppen oder starten. In dieser Betriebsart werden Einzelarbeitsschritte im Wesentlichen im Wechsel zwischen Roboter und Mensch/Bediener durchgeführt. So öffnet beispielsweise der Arbeiter eine Klappe, tritt zur Seite und startet dann eine kurze Sequenz der Robotersteuerung, in welcher dieser einen schweren Gegenstand in die Öffnung legt. Nach dem Ende der automatisch durchgeführten Sequenz kann der Mensch die Klappe wieder schließen. Das Starten, Stoppen oder Anwählen von Sequenzen kann über ein leicht zu bedienendes Eingabegerät, eine Sprachsteuerung oder über sensorisch erkannte Gesten des Werkers/Bedieners geschehen. Der Halb-Automatikbetrieb dient auch dem Eingriff des Bedieners in eine vollautomatische Programmsequenz, wenn diese aus nicht vorhergesehenen Gründen auf Probleme stößt oder Auffälligkeiten während des Arbeitsablaufes im Automatikbetrieb festgestellt werden. Der Bediener kann in diesem Fall den vollautomatischen Betrieb unterbrechen und wechselt in den Halb-Automatikbetrieb, der es ihm gestattet, einzelne Sequenzen zu wiederholen oder zu einem anderen Arbeitsschritt innerhalb des Programms zu springen. Die Funktionen im Halb-Automatikbetrieb sind beispielsweise "Pause", "Ausweichen", "Greifer aus/zu", "Play" (= zurücksetzen im Automatikbetrieb) oder "Arbeitsschritt vor- und zurückspringen"). Ebenso kann im Halb-Automatikbetrieb jederzeit in den Manipulationsbetrieb gewechselt werden.

In Ausgestaltung sieht die Erfindung vor, dass die Betriebsarten und/oder die Betriebsmodi zu- und abschaltbar sind und der Roboter mittels der Betriebsarten und/oder Betriebsmodi an unterschiedliche Funktionalitäten und/oder Arbeitstätigkeiten anpassbar ist.

In allen Betriebsarten ist durch entsprechende Ausgestaltung des Roboterinteraktionssystems sichergestellt, dass zu jedem Zeitpunkt die notwendige Sicherheit des Arbeiters/Werkers gewährleistet ist. Ein Robotersystem sowie der zugehörige und zugeordnete Arbeitsbereich sind derart gestaltet, dass die unterschiedlichen Betriebsmodi, wie beispielsweise Telemanipulationsbetrieb, Kollaborationsbetrieb oder vollautomatischer Betrieb, ohne aufwendige Um- bzw. Nachrüstung, insbesondere des Roboters, im beliebigen Wechsel betrieben werden können.

Ebenso ist die Gestaltung derart, dass die Zugänglichkeit der mit einem erfindungsgemäßen Roboterinteraktionssystem ausgestatteten hütten- oder walzwerkstechnischen Anlage erhalten bleibt und Fluchtwege im Falle von plötzlichen und gefährlichen Ereignissen nicht durch Gitter versperrt sind. Dies wird vor allem dadurch erreicht, dass das Roboterinteraktionssystem zum großen Teil ohne trennende Schutzeinrichtungen bei Einsatz des erfindungsgemäßen Roboterinteraktionssystems ausgelegt werden kann, so dass keine behindernden und/oder trennenden Gitter im Wege sind, falls Bedienpersonal/Werker den Arbeitsraum oder Arbeitsbereich des Roboters betreten muss. Die Maschinensicherheit der mit dem erfindungsgemäßen Roboterinteraktionssystem ausgestatteten hütten- oder walzwerkstechnischen Anlage wird statt durch trennende Schutzeinrichtungen der vorstehend beschriebenen Art durch sensorische Überwachung des Arbeitsbereiches und den Einsatz von sicheren Steuerungen und/oder einem Sicherheitssensorsystem realisiert.

Das vorstehend beschriebene flexible und/oder universelle Roboterinteraktionssystem besteht vorzugsweise wenigstens aus den Komponenten Roboter, Sicherheitssensorsystem, sichere Steuerung und Mensch-Roboter-Schnittstelle, die in Form einer Handsteuerung oder einer Sprachsteuerung ausgebildet sein kann.

Der in diesem Roboterinteraktionssystem zum Einsatz kommende Roboter ist vorzugsweise ein universeller, vorzugsweise frei programmierbarer, Industrieroboter. Natürlich kann das Roboterinteraktionssystem auch mehr als einen Roboter, beispielsweise zwei im Sinne von Arbeitsroboter und Assistenzroboter zusammenwirkende Roboter umfassen. Vorzugsweise handelt es sich bei dem oder den Roboter(n) um sechs-achsig bewegbare, deren Arbeits- oder Handhabungsarm mit einem Wechselsystem zur Aufnahme verschiedener Werkzeuge, Greifer oder Messgeräte ausgestattet ist. Vorzugsweise sollte(n) der oder die Roboter für den Einsatz in extremen Arbeitsumgebungen, d.h. im Heiß- und/oder Gefahrenbereich von hüttentechnischen oder walzwerkstechnischen oder hüttenmännischen Anlagen, ausgelegt sein. Eine solche Ausstattung wird heute handelsüblich unter der Bezeichnung "Foundry"-Ausstattung vermarktet. Hierbei sind die Greifer und Werkzeuge natürlich entsprechend auszulegen.

Die Erfindung zeichnet sich daher in Ausgestaltung auch dadurch aus, dass das Roboterinteraktionssystem an einer hüttentechnischen oder walzwerkstechnischen Anlage angeordnet und dort einem Arbeitsplatz oder Arbeitsbereich zugeordnet ist.

In weiterer Ausgestaltung sieht die Erfindung schließlich vor, dass das Roboterinteraktionssystem ein einen Sensor oder eine Kombination von Sensoren umfassendes Sicherheitssensorsystem umfasst, das die Anwesenheit eines Menschen in einem dem Roboterarbeitsbereich zugeordneten Sicherheitsbereich und/oder Eingangsbereich und/oder Detektionsbereich detektiert.

Das Sicherheitssensorsystem besteht vorzugsweise aus einer Kombination verschiedener Sensoren, die zum Erkennen menschlicher Anwesenheit geeignet sind. Das Sensorsystem ist dabei derart ausgelegt, dass menschliche Anwesenheit, beispielsweise das Betreten des Arbeitsbereiches, mit einem Maß an Sicherheit erkannt wird, so dass das Gesamtsystem den Anforderungen gesetzlicher Vorschriften und Richtlinien wie beispielsweise der Maschinenrichtlinie 2006/42/EG genügt.

Um dies zu erreichen umfasst das Sicherheitssensorsystem einzelne Sensoren, in der Regel jedoch eine Kombination von Sensoren, wobei die unterschiedlichen Sensorentypen auch mehrfach und auch redundant vorhanden sein können. Für den Einsatz als Sensor in dem Sicherheitssensorsystem eignen sich beispielsweise Laserscanner, Lichtvorhänge, Lichtschranken, Kameras mit Tiefenerkennung, Infrarotkameras, Ultraschallsensoren, Trittmatten, RFID (Radio Frequency Identification), Scanner oder Kraft-Moment Sensoren. Auch Türkontakte oder Schalter, die einem Arbeiter erlauben, dem Roboterinteraktionssystem oder dem Sicherheitssensorsystem anzuzeigen, dass der Arbeitsbereich betreten wird, sind für die Verwendung im Sicherheitssensorsystem geeignete Elemente. Die Elemente des Sicherheitssensorsystems, wie beispielsweise die verwendeten Sensoren, sind danach ausgewählt, dass sie den hüttentechnischen oder walzwerkstechnischen Einsatzumgebungsbedingungen entsprechen und trotz der dort vorhandenen hohen Staub- und Hitzebelastungen sicher arbeitsfähig sind. Hierbei wird bei der Auslegung des Sicherheitssensorsystems die sich aus den Arbeitsumgebungen ergebende geringere Zuverlässigkeit und Lebensdauer, wie sie beispielsweise bei optischen Sensoren im Einsatzbereich mit hohem Staubaufkommen auftreten kann, berücksichtigt. Eine weitere Aufgabe des Sicherheitssensorsystems besteht in der Überwachung des zugeordneten Arbeitsplatzes oder Arbeitsbereiches in Bezug auf gefährliche Zustände, insbesondere Anlagenzustände, die nicht unbedingt unmittelbar und primär durch die Bewegungen oder Tätigkeiten des Roboters, sondern aus dem Zustand der Anlage oder den Gegebenheiten am Arbeitsplatz herrühren. So sind beispielsweise temperaturerkennende Sensoren vorgesehen, die nicht nur geeignet sind, menschliche Anwesenheit wahrzunehmen, sondern die ebenso in der Lage sind, heiße Flächen oder flüssigen Stahl zu erkennen, so dass bei Produktionsunfällen oder dem Versagen von anlagentechnischen Einrichtungen Gefahren erkannt werden können. Das System erhöht mit Meldungen über potentielle Gefahrenstellen die Sicherheit des Bedienpersonals und der Werker in dem jeweiligen Arbeitsbereich zusätzlich. Außerdem können Sensoren zur Erfassung von giftigen oder schädlichen Prozessgasen, z.B. Kohlenmonoxid, auch im Sinne einer Ergonomie- und/oder Arbeitssicherheitsüberwachung in das Sicherheitssensorsystem integriert sein. Die durch die Sensoren und das Sicherheitssensorsystem ermittelten und/oder verarbeiteten Signale werden dann der Robotersteuerung oder aber auch zugeordneten Sicherheitssystem zugeleitet, die dann im Gefahrenfall ggfs. Alarm auslösen und/oder beispielsweise den Roboter stillsetzen oder im Falle eines verfahrbaren Roboters diesen aus dem Gefahrenbereich herausfahren.

Das ganz wesentliche Element des Roboterinteraktionssystems ist die Robotersteuerung, die zum einen die unterschiedlichen Interaktionsformen zwischen Mensch und Roboter ermöglicht und die zum anderen gewährleistet, dass der Mensch nicht durch den Roboter gefährdet oder insbesondere verletzt wird. Die Robotersteuerung ist dabei mit folgenden Funktionsmerkmalen und Funktionalitäten ausgestattet, die sie steuern und/oder beeinflussen: die Robotersteuerung erzeugt und/oder überwacht eine sichere Begrenzung der Robotergeschwindigkeiten (kartesisch und achsbezogen);
eine sichere Begrenzung des Bewegungsbereiches, durch beispielsweise virtuelle Wände, also einen Schutzbereich für den Roboter, der sich arbeitsplatzbezogen und/oder arbeitstätigkeitsbezogen verändern kann;
einen sicheren Betriebshalt des Roboters an beliebiger Position
und eine sichere Bremsrampenüberwachung.

Eine weitere Komponente des Roboterinteraktionssystems ist die Mensch-Roboter-Schnittstelle, die verschiedene Interaktionsformen zwischen Mensch und Maschine/Roboter ermöglicht. Bei einer Interaktionsform in der keine zeitliche und örtliche Trennung der Interaktionspartner vorliegt, sich also beide Interaktionspartner im Arbeits- und/oder Schutzbereich des Roboters befinden, erlaubt die Mensch-Roboter-Schnittstelle dem Arbeiter das Bedienen des Robotersystems, das direkte Beobachten der Anlagenzustände aus nächster Nähe, vorzugsweise innerhalb des Bewegungsraumes des Roboters, und, falls erforderlich, das Eingreifen in den Prozess, wobei das Roboterinteraktionssystem dann insbesondere mit einer vom Bediener, dem Menschen, zu bedienenden Zustimmungseinrichtung oder einem elektromechanischem Zustimmungsschalter ausgestattet ist. Unter einem Zustimmungsschalter wird hierbei eine Schalteinrichtung verstanden, die ständig betätigt sein muss, damit Steuersignale für gefahrbringende Zustände wirksam werden können. Zustimmungseinrichtungen oder elektromagnetische Zustimmungsschalter können als universelles 6D Eingabegerät, beispielsweise eine sogenannte Spacemouse, ausgebildet sein. Es ist aber auch möglich, diese als in der Roboterhand oder dem Roboterendeffektor angebrachten Kraft-Moment Sensor auszubilden, welcher eine intuitive Führung des Roboters unter Beibehaltung der geforderten Sicherheit ermöglicht. Es ist aber auch eine Ausführung mit eingebauter Sprachsteuerung möglich. Dies bringt den weiteren Vorteil, dass der jeweilige Arbeiter oder Bediener sich frei *im* Arbeitsraum des Roboters bewegen kann. Bei allen Ausführungsformen ist die Zustimmungseinrichtung essentieller Teil der Steuerung, ebenso wie eine für den jeweiligen Bediener oder Arbeiter erkennbare und erfassbare Visualisierung oder visualisierte Darstellung des nächsten geplanten Arbeitsschrittes, so dass die zeitlich nächstfolgenden Bewegungen des Roboters für den Arbeiter nicht überraschend erfolgen.

Um das vorstehend und nachstehend näher beschriebene Roboterinteraktionssystem an den jeweiligen Arbeitsplatz oder Arbeitsbereich, dem der das Roboterinteraktionssystem aufweisende Roboter zugeordnet wird, anzupassen und die für die konkrete Aufgabe jeweils notwendigen Betriebsmodi und Betriebsarten zu bestimmen, wird wie folgt vorgegangen: zunächst wird eine detaillierte Analyse der an dem jeweiligen Arbeitsplatz oder dem jeweiligen Arbeitsbereich ablaufenden Arbeitsprozesse und Einzeltätigkeiten vorgenommen. Einzeltätigkeitsschritte, aus denen sich die Einzeltätigkeiten oder Arbeitsprozesse aufbauen und zusammensetzen, werden einzeln danach bewertet, ob sie sich eher für durch einen Roboter durchzuführende Tätigkeit oder für vom Menschen durchzuführende Tätigkeiten eignen. So werden ergonomisch und sicherheitstechnisch unbedenkliche Tätigkeiten dem Menschen zugeordnet, während gefährliche oder schwere Tätigkeiten dem Roboter zufallen. Ferner werden sensorisch aufwendige und ungefährliche Arbeiten dem Menschen zugeordnet. Eine weitere Gruppe stellen Tätigkeiten dar, die sowohl ein hohes Belastungspotenzial oder eine hohe Gefährdung darstellen als auch eine Inspektion und eine darauf aufbauende, menschliche Beurteilung erforderlich machen. In dieser Gruppe arbeiten Roboter und Mensch dann in direkter Interaktion im selben Arbeitsraum des Arbeitsbereiches oder Arbeitsplatzes des Roboters zusammen.

Die jeweiligen Zuordnungen können problemlos in einem jeweiligen Betriebsmodus, so dass mehrere Betriebsmodi oder Betriebsarten, die dann Interaktionsformen und daraus abgeleitete Betriebsarten umfassen, in der Robotersteuerung abgelegt oder an einem mit dieser zusammenwirkenden Speicher abgelegt und abgebildet werden, so dass das Roboterinteraktionssystem darauf Zugriff hat. Die Umsetzung der einzelnen Mensch-Roboter-Interaktionen in einem Betriebsmodus oder einer Betriebsart bildet nun jeweils den Ablauf ab, in dem das Mensch-Roboter-Team die jeweils gestellte Arbeitsaufgabe gemeinsam löst, wobei reine Robotertätigkeiten in Abwesenheit des Menschen durchgeführt werden können, was eine höhere Arbeitsgeschwindigkeit des Roboters gestattet, da die Sicherheitssteuerung dann keine Rücksicht auf die Anwesenheit von Bedienungspersonal im Arbeitsbereich und/oder Schutzbereich des Roboters nehmen muss. Ebenso kann der Roboter dann stillgesetzt werden, wenn menschliche, vom Bedienungspersonal oder Werker auszuführende Tätigkeit zu einem gegebenen Zeitpunkt über einen bestimmten Zeitraum durchzuführen ist.

Weiterhin sind die Betriebsmodi derart flexibel ausgelegt, dass es für einen Bediener des jeweiligen Roboters oder des Roboterinteraktionssystems jederzeit möglich ist, in den gegebenen, programmierten Arbeitsablauf einzugreifen und manuelle Eingriffe vorzunehmen, wenn je nach Einzelfall aus unvorhergesehenen Gründen die Weiterführung der programmierten voll- oder teilautomatisierten Lösung aus Sicht des Bedieners ungeeignet zu sein scheint.

Weiterhin ist es möglich, das Roboterinteraktionssystem auch an das übergeordnete Prozessleitsystem anzuschließen, das der jeweiligen hüttentechnischen oder walzwerkstechnischen Anlage zugeordnet ist, so dass der aktuelle Betriebsmodus des jeweiligen Roboters, insbesondere Industrieroboters, der Arbeitsfortschritt der an dem jeweiligen Arbeitsplatz oder Arbeitsbereich des Roboters durchzuführenden Tätigkeit und/oder sensorisch erfasste Detektionsergebnisse, die am jeweiligen Roboter oder in der Umgebung des Roboters angeordnete Sensoren liefern, an das übergeordnete Prozessleitsystem signalmäßig weitergeleitet und gemeldet werden.

Insgesamt wird mit Hilfe des Roboterinteraktionssystems ein System geschaffen, das es ermöglicht, einen Roboter universell einzusetzen, und zwar nicht nur für einen Betrieb in einer Betriebsart oder einem Betriebsmodus "vollautomatischer Betrieb", sondern auch in Betriebsarten oder Betriebsmodi in welchen eine Interaktion von Mensch/Arbeiter/Bediener und Roboter stattfindet, wobei sich der Mensch und der Roboter zeitlich und räumlich gemeinsam im Arbeits- und Bewegungsbereich des Roboters befinden, wobei sich Mensch und Roboter zeitlich nacheinander im selben räumlichen Bereich des Bewegungs- oder Arbeitsbereiches des Roboters befinden oder aber wobei Roboter und Mensch räumlich in getrennten Positionen und ggfs. auch zeitlich im Sinne von zu unterschiedlichen Zeiten anwesend oder aktiv tätig sind und dennoch in Interaktion zu Erledigung einer gemeinsamen Aufgabe miteinander zusammenarbeiten. Dies ist unterschiedlich zum bisherigen Stand der Technik, wonach entweder die Roboter für bestimmte Tätigkeiten programmiert werden und sowohl eine zeitliche als auch eine örtliche Trennung von Robotertätigkeiten und menschlichen Tätigkeiten im Bereich der hüttentechnischen oder walzwerkstechnischen Anlagen stattfindet. In bekannten hüttenmännischen Anlagen findet nach derzeitigem Stand der Technik keine gleichzeitige Interaktion von Roboter und Mensch statt. Sobald ein Mensch den Arbeitsbereich des Roboters betritt, wird der Roboter stillgesetzt. Dann kann der Mensch seine Inspektions- oder Wartungstätigkeit ausführen. Anschließend verlässt der Mensch den Arbeits- oder Bewegungsbereich des Roboters wieder, bevor dann der Roboter erneut agiert.

Im Unterschied dazu ermöglicht es das erfindungsgemäße Roboterinteraktionssystem, dass Mensch und Roboter ohne zeitliche Trennung und/oder ohne örtliche Trennung in arbeitstechnische Interaktion zueinander treten. Beispielsweise ist es möglich, dass beide, d.h. Mensch und Roboter, im selben Arbeitsbereich, insbesondere im Arbeitsbereich des Roboters, zwar unterschiedliche Handgriffe oder Tätigkeiten, diese aber gleichzeitig ausführen, so dass keine zeitliche Trennung zwischen der Robotertätigkeit und der menschlichen Tätigkeit vorhanden ist. Darüber hinaus ist es möglich in diesem Arbeits- oder Bewegungsbereich des Roboters auch eine Interaktion derart durchzuführen, dass beispielsweise der Mensch eine erste Tätigkeit durchführt und der Roboter anschließend das Arbeitsergebnis aufnimmt und weiterverarbeitet. In diesem Sinne liegt dann keine örtliche Trennung zwischen der menschlichen Tätigkeit und der Robotertätigkeit vor. Die weitere Möglichkeit besteht in der vollständigen Aufhebung einer örtlichen und zeitlichen Trennung, die beispielsweise dann gegeben ist, wenn in einem Bewegungs- oder Arbeitsbereich des Roboters der Mensch und der Roboter quasi Hand in Hand arbeiten, d.h. der Mensch dem Roboter beispielsweise ein Werkstück anreicht, welches dieser ergreift und dann weiterverarbeitet. Mit Hilfe dieses flexibilisierten Roboterinteraktionssystems ist es möglich, die Einsatzmöglichkeiten von Robotern im Bereich hüttenmännischer, hüttentechnischer oder walzwerkstechnischer Anlagen zu vergrößern. Dies führt zu einer Erhöhung der Arbeitssicherheit, einer Verbesserung der Ergonomiesituation für die Werker/Bediener, aber auch zu einer Qualitätsverbesserung. Dies wird mit Hilfe des Roboterinteraktionssystems erreicht, das den damit ausgestatteten Roboter zu einem flexiblen Automatisierungssystem zur Handhabung verschiedenster Interaktionsformen zwischen Mensch und Roboter weiterbildet, und das arbeitsteilige Aufgaben, Ausführungen und Durchführungen mit zeitlicher und räumlicher Aufgabenteilung zwischen Mensch und Roboter ermöglicht. Mit Hilfe des Roboterinteraktionssystems wird der Roboter mit einer Vielzahl möglicher Funktionen, Betriebsarten und Betriebsmodi ausgestattet, so dass er dann vergleichbar mit einem sogenannten Schweizer Messer nicht nur die Grundfunktion eines automatisiert Handhabungsvorgängen oder Arbeitsvorgänge analog zur Schneidfunktion eines Messers durchführende Funktion besitzt, sondern darüber hinaus analog zum Schweizer Messer weitere Werkzeuge in Form von Betriebsarten oder Betriebsmodi umfasst. Ein solch flexibles oder universelles Roboterinteraktionssystem umfasst zumindest die Komponenten Roboter, Sicherheitssensorsystem mit den Funktionen Erkennen menschlicher Anwesenheit und Überwachung des Arbeitsplatzes auf gefährliche Zustände, Robotersteuerung und Mensch-Roboter-Schnittstelle, beispielsweise in Form einer Handsteuerung oder einer Sprachsteuerung. Die Flexibilität des Roboterinteraktionssystems wird dadurch erreicht, dass das System verschiedene Betriebsarten und/oder Betriebsmodi aufweist, die jeweils unterschiedliche Formen der Zusammenarbeit und Interaktion zwischen einem menschlichen Arbeiter und dem Roboterbetrieb abbilden und zulassen, sowie erweiterte Betriebsarten umfasst. Die verschiedenen Betriebsarten und/oder Betriebsmodi sind entweder unmittelbar in der Robotersteuerung gespeichert oder in mit der Robotersteuerung zusammenwirkenden Speicherelementen gespeichert.

Um das System besonders flexibel zu gestalten ist es möglich, den Roboter verfahrbar auf Fahrbahnen anzuordnen, wobei diese Fahrbahnen auch in Form von Kranbahnen ausgebildet sein können. Dies ermöglicht es, den Bewegungsraum und die damit verbundenen Einsatzmöglichkeiten des mit einem Roboterinteraktionssystem ausgestatteten Roboters weiter zu vergrößern.

Unterstützt wird dies weiterhin dadurch, dass dem Roboter jeweils sich in Abhängigkeit von seiner Aufgabenstellung dynamisch ändernde Schutzbereiche oder Schutzräume zugeordnet werden, die sich roboterarbeitsplatzbezogen oder robotertätigkeitsbezogen ausbilden oder ausbilden lassen.

Da im Rahmen der Erfindung das Zusammenarbeiten von Mensch und Roboter, d.h. eine Mensch-Roboter-Interaktion vorgesehen ist, können die jeweiligen Industrieroboter mit einem je nach Einsatzzweck unterschiedlichen, skalierbaren Automatisierungsgrad ausgestattet sein. Die Skalierbarkeit reicht hierbei von einem Roboter, der nahezu vollständig vom Menschen gesteuert wird, als dem einen Endpunkt der skalierbaren Automatisierung, bis zu einem Roboter, der ohne jegliche menschliche Kontrolle seine Aufgaben wahrnimmt, als dem anderen Ende der Automatisierungsskala. Hierbei steigt der Mechanisierungs-/Automatisierungsgrad eines Roboters mit steigendem Automatisierungsgrad an, während gleichzeitig der menschliche Bedienungsaufwand abnimmt. Stufen der skalierbaren Automatisierung sind beispielsweise am unteren Ende ein Teleroboter, der als reiner Telemanipulator vom Einsatzpersonal/Werker gesteuert wird. Der nächste Schritt ist die Kombination des Teleroboters, der Teleoperationen durchführt, mit manuellen Arbeitsschritten, die ein Werker ohne Handhabungseinrichtungen durchführt. Eine nächste Stufe ist beispielsweise, dass ein teilautomatisierter Assistenz- oder Arbeitsroboter Teilaufgaben selbstständig durchführt und in Interaktion mit diesem der Werker manuelle Arbeitsschritte durchführt. Die nächste Stufe kann dann aus der Kombination von per Teleoperation mit einem Teleroboter durchgeführten Arbeitsschritten mit teilautomatisiert durch einen Roboter durchgeführten Arbeitsschritten und mit manuell vom Werker ausgeführten Arbeitsschritten bestehen. Hierbei wird der Roboter zweckmäßigerweise so ausgestaltet, dass er sowohl als (frei)programmierbarer Industrieroboter teilautomatisierte Vorgänge als auch in den reinen Telemanipulatormodus als Teleroboter geschaltet werden kann. Die höchste Stufe ist dann die vollständige Automatisierung der gesamten an einer Hüttenwerkbetriebseinrichtung oder einer hüttentechnischen oder walzwerktechnischen Anlage anfallenden Arbeitstätigkeiten, die bisher beispielsweise von einem Werker durchgeführt wurden. Hier können dann auch verschiedene Roboter vollautomatisch zusammenarbeiten, so dass ein Assistenz- oder Arbeitsroboter in Kombination mit einem Serviceroboter Arbeitstätigkeiten durchführen kann.

Ebenso ist es möglich, den jeweiligen Industrieroboter skalierbar mit der jeweils benötigten "maschinellen Intelligenz" auszustatten. Die entsprechende "maschinelle Intelligenz" wird durch die sensorischen Fähigkeiten bestimmt, mit welchen der jeweilige Roboter, insbesondere Industrieroboter, ausgestattet ist. Während ein Industrieroboter ohne sensorische Fähigkeiten als "blinder" Roboter auf Aufgaben beschränkt bleibt, die ausschließlich das Kraft- und Hebevermögen des Roboters ausnutzen, kann ein Roboter mit Sensoren und damit einhergehender "maschineller Intelligenz" gegebenenfalls deutlich mehr und komplexere Arbeitstätigkeiten bewältigen. Allerdings ist eine Zunahme an "maschineller Intelligenz" auch mit einer zunehmend komplexeren Steuerung verbunden, was aber durch die erhöhte Anzahl an möglichen Arbeitstätigkeiten und damit an Einsatzmöglichkeiten begleitet wird. Stufen der skalierbaren "maschinellen Intelligenz" sind beispielsweise am unteren Ende ein ausschließlich koordinatengesteuerter "blinder" Roboter ohne Sensorik. Die nächste Stufe könnte ein mit einer einfachen Sensorik, wie beispielsweise einer Lichtschranke, ausgebildeter Industrieroboter darstellen, gefolgt von einer Stufe eines Industrieroboters mit einfacher, die Außenumgebung wahrnehmenden Sensorik, der unter zumindest noch partieller menschlicher Kontrolle und Bedienungshandhabung steht. Die nächste Stufe könnte ein Roboter mit einer komplexen Sensorik, beispielsweise einem Kamerasystem, sein, der in der Lage ist, die Außenumgebung wahrzunehmen und einzuschätzen und situationsabhängig tätig zu werden. Die oberste Stufe wäre dann ein Roboter mit einer umfassenden, komplexen, dem Menschen überlegenen Sensorik, wie beispielsweise ein Industrieroboter, der mit hochauflösenden Kameras, z.B. Wärmebildkameras, ausgestattet ist und die erhaltenen Signale in einer zugeordneten Auswertungs- und Steuerungseinheit bearbeitet. Insbesondere betrifft dies so genannte autonome Roboter oder kognitive Robotersysteme.

Diese mit einer skalierbaren "maschinellen Intelligenz" und einem skalierbaren Automatisierungsgrad ausgestatteten Industrieroboter werden im Bereich der hüttenmännischen, hüttentechnischen oder walzwerktechnischen Anlage derart und in Kombination zueinander, aber auch in Kombination mit manueller menschlicher Tätigkeit, eingesetzt, dass dem Grundgedanken und Grundkonzept eines ergonomischen und sicheren Arbeitens an der jeweiligen Hüttenwerkbetriebseinrichtung genüge getan wird.

Hierbei kann es dann auch vorgesehen sein, dass jedem Roboter ein oder mehrere Schutzbereiche zugeordnet sind, die dynamisch, je nach Roboter-Arbeitstätigkeit oder je nach Roboter-Arbeitsposition unterschiedlich groß und dimensioniert sowie variierend ausgebildet sind. Auch dieser Gedanke unterstützt die Grundkonzeption eines ergonomischen und sicheren Arbeitens im Bereich einer hüttenmännischen Anlage an den einzelnen Hüttenwerkbetriebseinrichtungen.

Um im Rahmen der Interaktion Mensch-Roboter die Übergabe von Tätigkeiten oder die Weiterführung von Tätigkeiten durch den Menschen außerhalb des Heiß- und/oder Gefahrenbereiches der jeweiligen Anlage durchführen lassen zu können, kann es auch vorgesehen sein, dass der jeweilige Industrieroboter verfahrbar im Bereich der jeweiligen Hüttenwerkbetriebseinrichtung oder hüttentechnischen oder walzwerktechnischen Anlage angeordnet ist, so dass dadurch der Arbeitsbereich des Industrieroboters flexibilisiert und vergrößert werden kann und die sichere Übergabe von Tätigkeiten oder Werkstücken oder Ähnlichem an den Werker außerhalb des Heiß- und/oder Gefahrenbereiches der jeweiligen Hüttenwerkbetriebseinrichtung oder dem jeweiligen Arbeitsplatz oder Arbeitsbereich sichergestellt ist.

Die Erfindung ist nachstehend anhand einer Zeichnung beispielhaft näher erläutert. Diese zeigt in
- Fig. 1: in schematischer Darstellung eine erste Interaktionsform von Roboter und Bediener,
- Fig. 2: in schematischer Darstellung eine zweite Interaktionsform von Roboter und Bediener und in
- Fig. 3: eine dritte Interaktionsform von Roboter und Bediener.

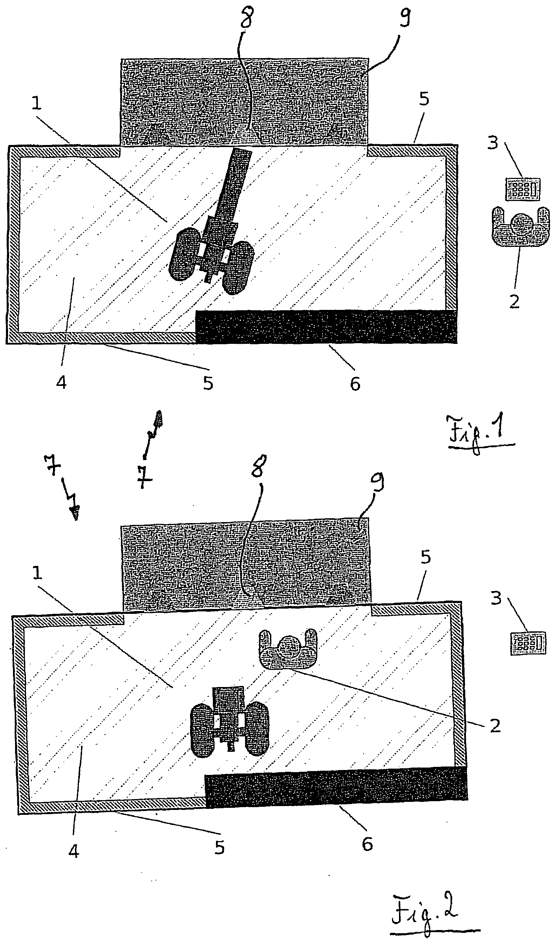

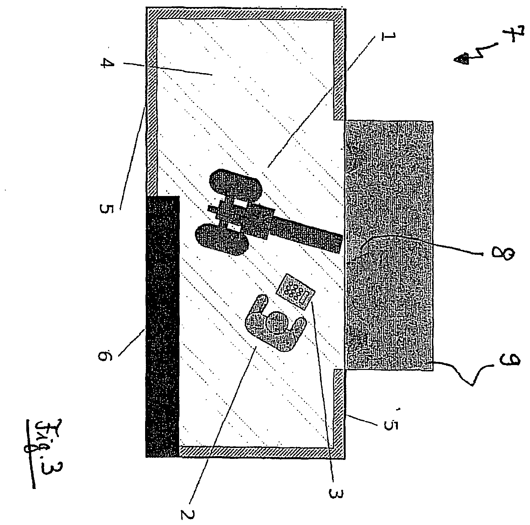

Die Figuren 1-3 zeigen die Wirkungsweisen eines Roboterinteraktionssystems anhand von im Bereich eines Pfannenstandes 7 einer hüttentechnischen Anlage bei im Rahmen der Inspektion und Pflege eines Pfannenschiebers 8 an einer Stahlpfanne 9 anfallenden Arbeitstätigkeiten. Hierbei zeigt die Fig. 1 schematisch die Arbeitstätigkeit des Aufbrennens des Gießkanals, die Fig. 2 schematisch die Tätigkeit des Öffnens des Schieberkastens und die Fig. 3 schematisch die Tätigkeit des Einsetzens einer neuen Schieberplatte.

Die durchzuführenden Arbeitstätigkeiten finden in einer Interaktion von Mensch/Arbeiter/Bediener 2 und Roboter 1 statt. Der Roboter 1 ist mit einer Robotersteuerung ausgestattet, die eine zugeordnete Mensch-Roboter-Schnittstelle aufweist, welche zusammen Bestandteil eines Roboterinteraktionssystems sind, der die Mensch-Roboter-Schnittstelle beeinflussende Betriebsarten und Betriebsmodi umfasst. Diese unterschiedlichen Betriebsarten und Betriebsmodi sind an unterschiedliche Automationsgrade des Roboters und/oder an unterschiedliche zeitliche und/oder örtliche Positionierungen der Interaktionspartner Mensch 2 und Roboter 1 in einem Arbeitsraum angepasst und/oder anpassbar ausgebildet.

Dem Roboter 1 ist weiterhin ein überwachter Sicherheitsbereich 4 zugeordnet, der von zwei überwachten Eingangsbereichen 5 und einem Wandabschnitt 6 sowie dem zu bearbeitenden Bereich der Stahlpfanne 9 umgrenzt ist. Sowohl der Sicherheitsbereich 4 als auch die überwachten Eingangsbereiche 5 werden mit Hilfe von Sensoren, die jeweils eine Sicherheitssensorik ausbilden und insbesondere dann reagieren, wenn ein Arbeiter oder Bediener 2 in den Sicherheitsbereich 4 eintritt, über die Robotersteuerung in Abhängigkeit von einem jeweils gewählten Arbeitsmodus und in Abhängigkeit von der aktiven Betriebsart entsprechende Roboteraktionen auslösen. Diese können darin bestehen, dass der Roboter 1 in eine Interaktion mit dem eintretenden Arbeiter oder Bediener 2 eintritt, dass der Roboter 1 seine Arbeitsgeschwindigkeit verlangsamt, dass der Roboter 1 stillgesetzt wird und/oder dass der Roboter 1 in eine Ruheposition zurückgefahren wird. Aber auch andere Aktionen können durch die Sicherheitssensorik ausgelöst werden.

Die Fig. 1 zeigt eine erste Interaktionsform der Mensch-Roboter-Interaktion, bei welcher eine örtliche und zeitliche Trennung der beiden Komponenten Mensch 2 und Roboter 1 vorhanden ist und sich das Roboterinteraktionssystem in einer Betriebsart Vollautomatik oder Telemanipulation befindet, wobei bei letzterer der Bediener 2 den Roboter 1 mit Hilfe einer Bedienerkonsole 3 manuell steuert. Bei der in der Fig. 1 dargestellten Arbeitstätigkeit des Aufbrennens des Gießkanals führt der Roboter 1 diese Tätigkeit des Aufbrennens durch, da diese Tätigkeit aufgrund des damit verbundenen Gefährdungspotentials dem Roboter 1 zugeordnet ist. Der Roboter 1 brennt den Gießkanal vollständig eigenständig, in Abwesenheit des Bedieners 2, d.h. während sich der Bediener 2 außerhalb des überwachten Sicherheitsbereiches 4 befindet, auf. In Ausnahmefällen ist ein Aufbrennen des Gießkanals auch per Telemanipulation denkbar. In diesem Falle steuert dann der weiterhin außerhalb des Sicherheitsbereiches 4 positionierte Bediener 2 den Roboter 1 mittels seiner Bedienerkonsole 3. Da sich bei dieser Interaktionsform der Arbeiter/Bediener 2 außerhalb des Bewegungs- und Arbeitsraumes - und damit des überwachten Sicherheitsbereiches 4 - des Roboters 1 befindet, kann die Steuerung, insbesondere in Form der obenstehend erwähnten sicheren Steuerung oder Sicherheitssteuerung den Roboter 1 mit voller Arbeitsgeschwindigkeit bewegen. Dies geschieht solange, bis das den Sicherheitsbereich 4 und/oder den Eingangsbereich 5 überwachende Sensorsicherheitssystem oder die diesem zugeordnete Sicherheitssensorik die Anwesenheit von Personen feststellt. Betritt ein Mensch, beispielsweise ein Arbeiter 2, den überwachten Sicherheitsbereich 4 oder durchschreitet er den überwachten Eingangsbereich 5 so verbleibt dem Roboter 1 genügend Zeit die durch die Robotersteuerung dann bewirkte Einstellung des Brennprozesses durchzuführen und sich bzw. den aktuellen Arbeitsprozess stillzusetzen.

Die Fig. 2 zeigt als zweite Interaktionsform die zeitliche Trennung von Roboter 1 und Arbeiter/Bediener 2, wobei eine örtliche Trennung nicht gegeben ist, da sich sowohl der Roboter 1 als auch der Arbeiter/Bediener 2 im überwachten Sicherheitsbereich 4 befindet. In dieser Stellung wird der Roboter 1 vorzugsweise in der Betriebsart Halbautomatik betrieben. In dieser Positionierung wird der Arbeitsvorgang des Öffnens eines Schieberkastens durchgeführt. Diese Arbeitstätigkeit ist für den Bediener 2 weder ergonomisch belastend noch gefährlich, andererseits wäre der zu betreibende sensorische Aufwand, um einen Roboter 1 derart auszustatten, dass er diese Arbeitstätigkeit vollautomatisch durchführen könnte, hingegen sehr groß. Entsprechend der dem Roboterinteraktionssystem zugrundeliegenden und vorstehend erläuterten Philosophie wird für diese Arbeitstätigkeit daher ein Betriebsmodus gewählt, in welchem der Bediener oder Arbeiter 2 diese Arbeitstätigkeit ausführt, während der Roboter 1 sicher stillgesetzt ist.

Die Fig. 3 zeigt als dritte Interaktionsform das zeitlich und örtlich gemeinsame Zusammenwirken von Roboter 1 und Bediener 2, so dass weder eine örtliche noch eine zeitliche Trennung zwischen Roboter 1 und Bediener 2 gegeben ist. In dieser Interaktionsform liegt im Ausführungsbeispiel die Betriebsart Halbautomatik oder Handbetrieb vor, mittels welcher die Arbeitstätigkeit des Einsetzens einer neuen Schieberplatte in den Boden einer Stahlpfanne 9 durchgeführt wird. Da eine Schieberplatte ein beträchtliches Gewicht aufweist, würde sich dieser Vorgang des Einsetzens einer neuen Schieberplatte für einen menschlichen Bediener 2 unter ergonomischen Gesichtspunkten als problematisch darstellen. Andererseits verlangt das Einsetzen der Schieberplatte in den Boden der Stahlpfanne 9 jedoch eine präzise Wahrnehmung der örtlichen Gegebenheiten. Aufgrund dieser Rahmenbedingungen wird in diesem Falle mittels des Roboterinteraktionssystems nun eine Mensch-Roboter-Interaktion derart durchgeführt, dass der Roboter 1 in Anwesenheit des Arbeiters 2 in seinem Bewegungsraum die Schieberplatte in die direkte Nähe der Stahlpfanne 9 transportiert und dann der Bediener 2 per Handsteuerung mittels seiner Bedienerkonsole 3 den Roboter 1 steuert, so dass dieser vom Bediener 2 gesteuert die Schieberplatte zur Beendigung dieser Arbeitstätigkeit oder dieses Arbeitsvorganges in den Schieberkasten am Boden der Stahlpfanne 9 einsetzt.

## Patentansprüche

1. Verfahren zum Betrieb eines Roboterinteraktionssystems, das an einer hüttentechnischen oder walzwerkstechnischen Anlage angeordnet und dort einem Arbeitsplatz oder Arbeitsbereich zugeordnet ist, zur arbeitsteiligen Aufgabenausführung zwischen einem Roboter (1) und einem menschlichen Arbeiter (2) in zeitlicher und räumlicher Interaktion im Arbeits- und Bewegungsbereich des Roboters (1) an dem Arbeitsplatz oder Arbeitsbereich an der hütten- oder walzwerkstechnischen Einrichtung oder Anlage,
wobei das Roboterinteraktionssystem den Roboter (1) mit seinem Arbeits- und Bewegungsbereich, ein Sicherheitssensorsystem mit den Funktionen des Erkennens menschlicher Anwesenheit und der Überwachung des Arbeitsplatzes auf gefährliche Zustände, eine Robotersteuerung und eine Mensch-Roboter-Schnittstelle, welche mittels einer Handsteuerung oder einer Sprachsteuerung die Durchführung verschiedener Betriebsarten und Betriebsmodi als die jeweilige Interaktionsform zwischen Mensch (2) und Roboter (1) ermöglicht, umfasst,
wobei die Robotersteuerung die Mensch-Roboter-Schnittstelle und die die Wirkweise der Mensch-Roboter-Schnittstelle beeinflussenden Betriebsarten und Betriebsmodi aufweist und die den Anforderungen des jeweiligen Arbeitsplatzes entsprechenden Betriebsarten und Betriebsmodi entweder unmittelbar in der Robotersteuerung oder in mit der Robotersteuerung zusammenwirkenden Speicherelementen gespeichert sind,
wobei ein Betriebsmodus oder eine Betriebsart jeweils den Ablauf abbildet, in dem der menschliche Arbeiter (2) und der Roboter (1) in einer Mensch-Roboter-Interaktion die jeweilige Arbeitsaufgabe gemeinsam durchführen, wobei das Roboterinteraktionssystem dazu an den jeweiligen Arbeitsplatz oder Arbeitsbereich angepasst ist und die für die konkrete Arbeitsaufgabe jeweils notwendigen Betriebsmodi und Betriebsarten auf Basis einer Analyse der an dem jeweiligen Arbeitsplatz oder Arbeitsbereich ablaufenden Arbeitsprozesse und Einzeltätigkeiten bestimmt sind
wobei das Sicherheitssensorsystem einen Sensor oder eine Kombination von Sensoren umfasst und die Anwesenheit des menschlichen Arbeiters (2) in einem dem Arbeitsbereich des Roboters (1) zugeordneten Sicherheitsbereich (4) und/oder Eingangsbereich (5) detektiert und überwacht, wobei die durch die Sensoren und das Sicherheitssensorsystem ermittelten und/oder verarbeiteten Signale der Robotersteuerung zugeleitet werden und das Sicherheitssensorsystem oder eine diesem zugeordnete Sicherheitssensorik dann, wenn ein menschlicher Arbeiter (2) den Sicherheitsbereich (4) und/oder den Eingangsbereich (5) betritt, reagiert und über die Robotersteuerung in Abhängigkeit von einem jeweils gewählten Betriebsmodus und in Abhängigkeit von der aktiven Betriebsart entsprechende Roboteraktionen auslöst, und
wobei die den Roboter (1) an unterschiedliche Funktionalitäten und/oder Arbeitstätigkeiten anpassenden Betriebsarten und Betriebsmodi derart zuschaltbar und abschaltbar in der Robotersteuerung oder in mit der Robotersteuerung zusammenwirkenden Speicherelementen abgelegt und abgebildet sind, dass das Roboterinteraktionssystem darauf Zugriff hat und die unterschiedlichen Betriebsarten und Betriebsmodi in beliebigem Wechsel betrieben werden können, sodass der Roboter (1) mittels der jeweils zugeschalteten oder abgeschalteten Betriebsart oder Betriebsmodus an unterschiedliche Funktionalitäten und/oder Arbeitstätigkeiten angepasst wird,
wobei die Betriebsarten und Betriebsmodi der Robotersteuerung dadurch an unterschiedliche Automatisierungsgrade des Roboters (1) und/oder an unterschiedliche zeitliche und/oder örtliche Positionierungen der Interaktionspartner Mensch (2) und Roboter (1) in einem Arbeitsraum angepasst sind, dass sie einen automatisierten Betrieb des Roboters (1) und Betriebsarten und Betriebsmodi umfassen, bei deren Anwendung eine arbeitstechnische Interaktion zwischen Mensch (2) und Roboter (1) stattfindet, bei welchen sich der Mensch (2) und der Roboter (1) zeitlich und räumlich gemeinsam im Arbeits- und Bewegungsbereich des Roboters (1) befinden oder sich der Mensch (2) und der Roboter (1) zeitlich nacheinander im selben räumlichen Bereich des Bewegungs- oder Arbeitsbereiches des Roboters (1) befinden oder der Roboter (1) und der Mensch (2) räumlich in getrennten Positionen und insbesondere auch zeitlich unterschiedlich aktiv sind und dennoch in Interaktion zur Erledigung einer gemeinsamen Aufgabe miteinander zusammenarbeiten.

2. Verfahren zum Betrieb eines Roboterinteraktionssystems nach Anspruch 1, **dadurch gekennzeichnet, dass** das Roboterinteraktionssystem an ein übergeordnetes, der jeweiligen hüttentechnischen oder walzwerkstechnischen Anlage zugeordnetes Prozessleitsystem angeschlossen ist, wobei der aktuelle Betriebsmodus des jeweiligen Roboters (1), der Arbeitsfortschritt der an dem jeweiligen Arbeitsplatz oder Arbeitsbereich des Roboters (1) durchzuführenden Tätigkeit und/oder sensorisch erfasste Detektionsergebnisse, die am jeweiligen Roboter (1) oder in der Umgebung des jeweiligen Roboters (1) angeordnete Sensoren liefern, an das übergeordnete Prozessleitsystem signalmäßig weitergeleitet und gemeldet werden.

3. Verfahren zum Betrieb eines Roboterinteraktionssystems nach Anspruch 1 oder 2, **dadurch gekennzeichnet, dass** der Robotersteuerung Signale des Sicherheitssensorsystems zugeleitet werden, die eine sichere Begrenzung eines sich arbeitsplatzbezogen und/oder arbeitstätigkeitsbezogen verändernden Roboterschutzbereichs überwacht und in Form virtueller Wände erzeugt.

## Claims

1. Method of operating a robot interaction system which is arranged at a metallurgical or rolling-mill plant and associated thereat with a work place or work region, for task execution with division of work between a robot (1) and a human worker (2) in temporal and spatial interaction in the work and movement area of the robot (1) at the work place or work region of the metallurgical or rolling-mill equipment or plant,
wherein the robot interaction system comprises the robot (1) with its work and movement area, a safety sensor system with the functions of recognition of human presence and monitoring of the work place for risk states, a robot control and a man/robot interface, which by means of manual control or verbal control enables performance of different kinds of operation and modes of operation as the respective form of interaction between man (2) and robot (1),
wherein the robot control comprises the man/robot interface and the kinds of operation and modes of operation influencing the action of the man/robot interface, the kinds of operation and modes of operation corresponding with the requirements of the respective work place being stored either directly in the robot control or in memory elements co-operating with the robot control,
wherein a mode of operation or a kind of operation each represents the sequence in which the human worker (2) and the robot (1) together perform the respective work task in a man/robot interaction,
wherein the robot interaction system is for that purpose adapted to the respective work place or work region and the modes of operation and kinds of operation respectively necessary for the actual work task are determined on the basis of an analysis of the work processes and individual activities elapsing at the respective work place or work region, wherein the safety sensor system comprises a sensor or a combination of sensors and the presence of the human worker (2) in a safety area (4) and/or entry area (5) associated with the work area of the robot (1) is detected and monitored, wherein the signals determined and/or processed by the sensors and the safety sensor system are fed to the robot control and the safety sensor system or a safety sensing unit associated therewith reacts when a human worker (2) enters the safety area (4) and/or the entry area (5) and by way of the robot control triggers appropriate robot actions in dependence on a respectively selected mode of operation and in dependence on the active kind of operation, and
wherein the kinds of operation and modes of operation adapting the robot (1) to different functionalities and/or work activities can be switched on and switched off in such a way in the robot control or filed and imaged in memory elements co-operating with the robot control that the robot interaction system has access thereto and the different kinds of operation and modes of operation can be operated in desired alternation so that the robot (1) is adapted by means of the respectively switched-on or switched-off kind of operation or mode of operation to different functionalities and/or work activities,
wherein the kinds of operation and modes of operation of the robot control are adapted in such a way to different degrees of automation of the robot (1) and/or to different temporal and/or spatial positionings of the interaction partners of human (2) and robot (1) in a work space that they comprise an automated operation of the robot (1) and kinds of operation and modes of operation in the use of which a work-technological interaction between human (2) and robot (1) takes place in which the human (2) and the robot (1) are present together in terms of time and space in the work and movement area of the robot (1) or in which the human (2) and the robot (1) are present in succession in the same spatial region of the movement or work area of the robot (1) or in which the robot (1) and the human (2) are active in separate positions in terms of space and particularly also differently in terms of time and nevertheless co-operate with one another in interaction for execution of a common task.

2. Method of operating a robot interaction system according to claim 1, **characterised in that** the robot interaction system is connected with a superordinate process management system associated with the respective metallurgical or rolling-mill plant, wherein the instantaneous mode of operation of the respective robot (1), the work progress of the activity being performed at the respective work place or work region of the robot (1) and/or sensor-detected detection results which sensors arranged at the respective robot (1) or in the environment of the respective robot (1) deliver are passed on and reported to the superordinate process management system by signal.

3. Method of operating a robot interaction system according to claim 1 or 2, **characterised in that** signals of the safety sensor system, which monitors a safe boundary of a variable robot protective area related to work place and work activity and generates the boundary in the form of virtual walls, are fed to the robot control.

## Revendications

1. Procédé destiné au fonctionnement d'un système d'interactions robotiques qui est disposé à l'endroit d'une installation sidérurgique ou de laminage et qui est affecté à cet endroit à un poste de travail ou à une zone de travail, pour l'exécution de tâches du côté travail entre un robot (1) et un travailleur humain (2) en interaction temporelle et spatiale dans la zone de travail et de déplacement du robot (1) au poste de travail ou dans la zone de travail de l'établissement ou de l'installation sidérurgique ou de laminage ;
dans lequel le système d'interactions robotiques comprend le robot (1) avec sa zone de travail et de déplacement, un système de détection de sécurité muni des fonctions que sont la reconnaissance d'une présence humaine et la surveillance du poste de travail en ce qui concerne des conditions dangereuses, une commande de robot et une interface être humain-robot qui permet, au moyen d'une commande manuelle ou d'une commande vocale, la mise en oeuvre de différents types de fonctionnement et de différents modes de fonctionnement en tant que forme d'interaction respective entre l'être humain (2) et le robot (1) ;
dans lequel la commande de robot présente l'interface être humain-robot ainsi que les types de fonctionnement et les modes de fonctionnement qui influencent le mode d'action de l'interface être humain-robot, et les types de fonctionnement et les modes de fonctionnement qui correspondent aux exigences du poste de travail respectif sont, soit enregistrées directement dans la commande du robot, soit dans des éléments de mémoire qui coopèrent avec la commande de robot ;
dans lequel un mode de fonctionnement ou un type de fonctionnement reproduit respectivement le déroulement au cours duquel le travailleur humain (2) et le robot (1) exécutent de manière conjointe la tâche de travail respective dans une interaction être humain-robot;
dans lequel le système d'interactions robotiques est conçu à cet effet à l'endroit du poste de travail respectif ou de la zone de travail respective et les modes de fonctionnement et les types de fonctionnement respectivement requis pour la tâche de travail concrète sont déterminés sur base d'une analyse des processus de travail et des tâches individuelles qui se déroulent au poste de travail respectif ou dans la zone de travail respective ;
dans lequel le système de détection de sécurité comprend un capteur ou une combinaison de capteurs et détecte et surveille la présence du travailleur humain (2) dans une zone de sécurité (4) et/ou une zone d'entrée (5) attribuée à la zone de travail du robot (1) ; dans lequel les signaux identifiés et/ou traités par l'intermédiaire des capteurs et du système de détection de sécurité sont transmis à la commande du robot et le système de détection de sécurité ou un ensemble de détecteurs de sécurité qui lui est attribué réagit lorsqu'un travailleur humain (2) pénètre dans la zone de sécurité (4) et/ou dans la zone d'entrée (5) et déclenche, par l'intermédiaire de la commande du robot, en fonction du mode de fonctionnement respectivement sélectionné et en fonction du type de fonctionnement actif, des actions robotiques correspondantes ; et dans lequel les types de fonctionnement et les modes de fonctionnement qui adaptent le robot (1) aux différentes fonctionnalités et/ou aux différentes tâches de travail peuvent être ainsi mis en circuit et mis hors circuit dans la commande de robot ou bien sont déposés et reproduits dans des éléments de mémoire qui coopèrent avec la commande de robot, d'une manière telle que le système d'interactions robotiques peut y avoir accès et que les différents types de fonctionnement et les différents modes de fonctionnement peuvent être exploités de manière interchangeable d'une manière telle que le robot (1), au moyen du type de fonctionnement ou du mode de fonctionnement respectivement mis en circuit ou mis hors circuit, est conçu pour des fonctionnalités et/ou pour des tâches de travail différentes ;
dans lequel les types de fonctionnement et les modes de fonctionnement de la commande de robot sont adaptés à différents degrés d'automatisation du robot (1) et/ou à différents positionnements dans le temps et/ou dans l'espace des partenaires des interactions que sont l'être humain (2) et le robot (1) dans un lieu de travail, d'une manière telle qu'ils comprennent un fonctionnement automatisé du robot (1) et des types de fonctionnement et des modes de fonctionnement, lors de la mise en application desquels on obtient une interaction de travail entre l'être humain (2) et le robot (1), dans lesquels l'être humain (2) et le robot (1) se retrouvent de manière conjointe dans le temps et dans l'espace dans la zone de travail et de déplacement du robot (1) ou bien dans lesquels l'être humain (2) et le robot (1) se suivent dans le temps dans le même espace de la zone de déplacement ou de travail du robot (1) ou bien dans lesquels l'être humain (2) et le robot (1) sont actifs de manière différente dans des positions séparées dans l'espace et en particulier également de manière différente dans le temps et coopèrent malgré tout l'un avec l'autre en interaction pour la réalisation d'une tâche commune.

2. Procédé pour le fonctionnement d'un système d'interactions robotiques selon la revendication 1, **caractérisé en ce que** le système d'interactions robotiques est raccordé à un système de conduite de processus supérieur attribué à l'installation respective de type sidérurgique ou de laminage ; dans lequel le mode de fonctionnement en vigueur du robot respectif (1), la progression de l'activité qui doit être effectuée au poste de travail respectif ou dans la zone de travail respective du robot (1) et/ou des résultats de détection enregistrés de manière sensorielle, que fournissent les capteurs qui sont disposés sur le robot respectif (1) ou dans l'environnement du robot respectif (1), sont transmis et sont communiqués par l'intermédiaire de signaux au système de conduite de processus supérieur.

3. Procédé pour le fonctionnement d'un système d'interactions robotiques selon la revendication 1 ou 2, **caractérisé en ce que** des signaux du système de détection de sécurité sont transmis à la commande du robot qui surveille une délimitation sécurisée d'une zone de protection du robot, qui se modifie en fonction du poste de travail et/ou en fonction de la tâche de travail, et qui génère ladite délimitation sous la forme de murs virtuels.
